# EUROPEAN PATENT SPECIFICATION

(11) **EP 2 872 751 B1**
(45) Date of publication and mention of the grant of the patent: **12.04.2017**
(21) Application number: 13737296.7
(22) Date of filing: 12.06.2013
(51) Int. Cl.: F01N 13/10, F01N 13/18, F02B 37/00, F02B 37/02, F02B 75/22

(54) **EXHAUST MODULE AND RECIPROCATING ENGINE**
ABGASMODUL UND KOLBENMASCHINE
MODULE D'ÉCHAPPEMENT ET MOTEUR À MOUVEMENT ALTERNATIF

(30) Priority: 28.06.2012 FI 20125738
(43) Date of publication of application: 20.05.2015
(73) Proprietor: Wärtsilä Finland Oy, 65380 Vaasa (FI)
(72) Inventor: JÄRVI, Arto, FI-65320 Vaasa (FI); SANDBERG, Juho, FI-20360 Turku (FI); HUUSKONEN, Mauri, 65100 Vaasa (FI)
(74) Representative: Berggren Oy, Helsinki & Oulu
(86) International application number: PCT/FI2013/050643
(87) International publication number: WO 2014/001624

(56) References cited:
- EP-A1- 1 777 387
- EP-A1- 1 873 366
- DE-A1-102004 044 172
- DE-A1-102010 039 751

## Description

The invention relates to an exhaust module for a reciprocating engine, in which cylinders are arranged in V-configuration. The invention also relates to a reciprocating engine.

In large reciprocating engines, such as those used in ships or at power plants, the exhaust manifolds are large and therefore difficult to mount on the engine. In V-engines where the exhaust gases of both cylinders banks are conducted to the same turbocharger, the exhaust gas flows from the cylinder banks are typically combined by a Y piece prior to the turbocharger. This changes the exhaust gas flow rate and flow conditions at the junction of the flows, which can cause problems to the operation of the turbocharger. Additionally, Y pieces may warp as a result of the thermal expansion.

An exhaust module according to the preamble of claim 1 is known from document FR 2 947 861 A1.

An object of the present invention is to provide an improved exhaust module for a turbocharged reciprocating engine, in which cylinders are arranged in two banks.

According to the invention, this object can be achieved by an exhaust module according to claim 1. The exhaust module according to the invention comprises a first exhaust manifold for receiving exhaust gas from cylinders of a first cylinders bank. The first exhaust manifold has a first end and a second end. The exhaust module further comprises a second exhaust manifold for receiving exhaust gas from cylinders of a second cylinder bank. The second exhaust manifold has a fist end and a second end. The exhaust module is provided with a connecting duct that connects the second end of the first exhaust manifold to the first end of the second exhaust manifold. The exhaust module is also provided with a second connecting duct for connecting the second end of the second exhaust manifold with a turbine inlet.

With the exhaust module according to the invention both cylinder banks can be connected to the same turbine inlet without complicate branch pipes. Exhaust gas from the first exhaust manifold is conducted through the first end into the second exhaust manifold, and thereafter exhaust gas from the cylinders of the second cylinder banks is combined with exhaust gas flow from the first exhaust manifold. Finally, the combined exhaust gas flow from the first and second cylinders banks is conducted through the second end into the turbine inlet. The exhaust gas flow rate in the second exhaust manifold increases in a stepped manner without large changes in flow conditions, which improves the operation of the turbocharger.

In the following the invention will be described by way of an example with reference to the accornpanying drawings in which
Figure 1 shows an exhaust module according to an embodiment of the present invention, and
Figure 2 shows schematically a reciprocating engine, which is provided with an exhaust module of fig. 1.
Figure 3 shows an exhaust manifold.
Figure 4 shows schematically a reciprocating engine, which is provided with an sexhaust module of fig. 3.

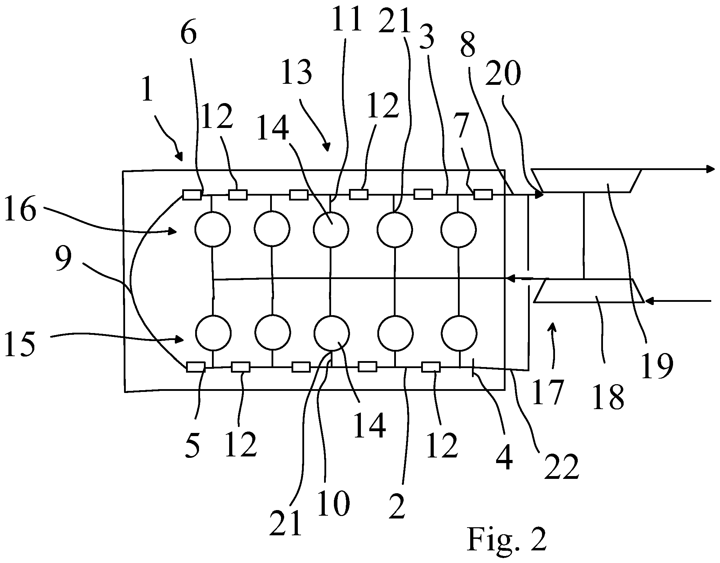

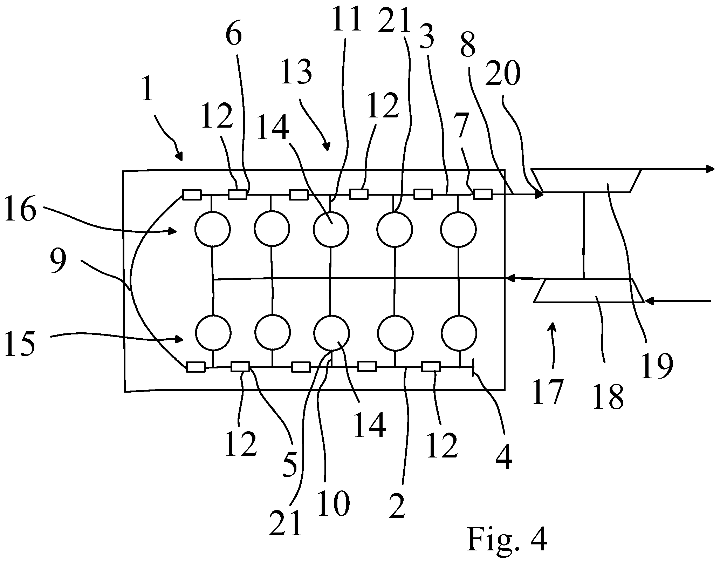

Figures 2 and 4 disclose a reciprocating engine 13 having several cylinders 14. The cylinders 14 are arranged in two banks 15, 16 in a V-configuration. The engine can be a large reciprocating engine. Large reciprocating engine refers here to such engines that can be used for instance as main and auxiliary engines in ships or in power plants for production of heat and/or electricity. The engine 13 comprises a turbocharger 17 having a compressor 18 and a turbine 19. Exhaust gases from cylinders 14 of a first cylinder bank 15 and a second cylinder bank 16 are arranged to pass through the Turbine 19.

The engine 13 is provided with an exhaust module 1 for connecting the cylinders 14 to the turbine inlet 20. The structure of the exhaust module is shown in more detailed manner in figs. 2 and 4. The exhaust module 1 comprises a first exhaust manifold 2 for receiving exhaust gas from cylinders of the first cylinder bank 15. The first exhaust manifold 2 has a first end 4 and a second end 5. The first exhaust manifold 2 is provided with first branch pipes 10 for connecting the first exhaust manifold 2 to exhaust ports 21 of the cylinders of the first cylinder bank 15.

The exhaust module 1 further comprises a second exhaust manifold 3 for receiving exhaust gas from cylinders of the second cylinder bank 16. The second exhaust manifold 3 has a fist end 6 and a second end 7. The second exhaust manifold 3 is provided with second branch pipes 11 for connecting the second exhaust manifold 3 to exhaust ports 21 of the cylinders of the second cylinder bank 16.

The exhaust module 1 is provided with a connecting duct 9 that connects the second end 5 of the first exhaust manifold 2 to the first end 6 of the second exhaust manifold 3. The exhaust module 1 comprises a bellows 12, which is arranged yetween the second end 5 of the first exhaust manifold 2 and the connecting duct 9. Another bellows 12 is arranged between the first end 6 of the second exhaust manifold 3 and the connecting duct 9. Further, the first exhaust manifold 2 is provided with bellows 12 that are arranged between the first branch pipes 10. Also the second exhaust manifold 3 is provided with bellows 12 that are arranged between the second branch pipes 11. The purpose of the bellows 12 is to compensate the thermal expansion of the exhaust manifolds 2. 3 and/or other components of the exhaust module 1.

The exhaust module 1 is provided with a second connecting duct 8, by means of which the second end 7 of the second exhaust manifold 3 is connected to the turbine inlet 20. In the embodiment of figs, 1 and 2 the exhaust module 1 is provided with a third connecting duct 22 that connects the first end 4 of the first exhaust manifold 2 to the second connecting duct 8. An inner diameter of the third connecting duct 22 is smaller than that of the first exhaust manifold 2. The inner diameter of the third connecting duct 22 is at least 30 %, topically at least 40 %, more typically at least 50 % of the inner diameter of the first exhaust manifold 2. The inner diameter of the third connecting duct 22 can be 40-55% of the inner diameter of the first exhaust manifold 2.

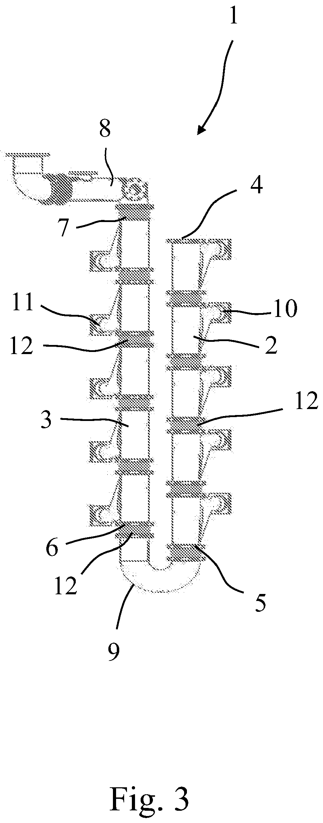

In figs. 3 and 4 the first end 4 of the first exhaust duct 2 is closed.

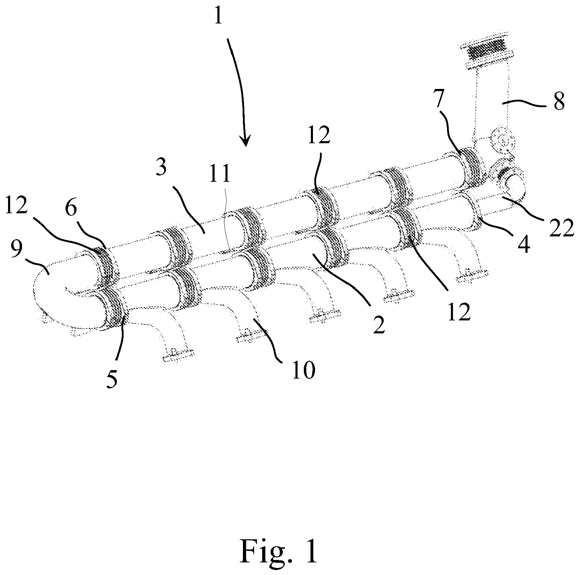

When the engine 13 is running, the first exhaust manifold 2 receives exhaust gas from the cylinders of the first cylinder bank 15. From the first exhaust manifold 2 exhaust gas is conducted along the connecting duct 9 into the second exhaust manifold 3. The second exhaust manifold 3 receives exhaust gas from the cylinders of the second cylinder bank 16. Exhaust gas is conducted from the second exhaust manifold 3 along the second connecting duct 8 to turbine inlet 20. In the embodiment of figs. 1 and 2 exhaust gas is also conducted from the first exhaust manifold 2 to the second connecting duct 8 along the third connecting duct 22. Exhaust gas passes through the turbine 19 to drive the compressor 18. The compressor 18 increases the pressure of the inlet air of the engine 13.

## Claims

1. An exhaust module (1) for a turbocharged (17) reciprocating engine (13), in which the cylinder (14) are arranged in two banks (15, 16), the exhaust module (1) comprising
- a first exhaust manifold (2) for receiving exhaust gas from cylinders of a first cylinder bank (15), said first exhaust manifold (2) having a first end (4) and a second end (5).
- a second exhaust manifold (3) for receiving exhaust gas from cylineders of a second cylinders bank (16), said second exhaust manifold (3) having a first end (6) and a second end (7),
- a connecting duct (9) that connects the second end (5) of the first exhaust. manifold (2) to the first end (6) of the second exhaust manifold (3), and
- a second connecting duct (8) for connecting the second end (7) of the second exhaust manifold with a turbine inlet (20), **characterized in that** the exhaust module (1) is further provided with a third connecting duct (22) that connects the first end (4) of the first exhaust manifold (2) to the second connecting duct (8).

2. The exhaust module according to claim 1, **characterized in that** the exhaust module (1) is provided with the third connecting duct (22) and an inner diameter of the third connecting duct (22) is smaller than that of the first exhaust manifold (2),

3. The exhaust module according to claim 1 or 2, **characterized in that** the exhaust module (1) is provided with the third connecting duct (22) and the inner diameter of the third connecting duct (22) is at least 40 % of the inner diameter of the first exhaust manifold (2).

4. The exhaust module according to claim 1, **characterized in that** the first exhaust manifold (2) comprises first branch pipes (10) for connecting the first exhaust manifold (2) to exhaust ports (21) of the cylinders of the first cylinder bank (15).

5. The exhaust module according to claim 1 or 4, **characterized in that** the second exhaust manifold (3) comprises second branch pipes (11) for connecting the second exhaust manifold (3) to exhaust ports (21) of the cylinders of the second cylinder bank (16).

6. The exhaust module according to claim 1. **characterized in that** a billows (12) is arranged:
- between the second end (5) of the first exhaust manifold (2) and the connecting duct (9), and
- between the first end (6) of the second exhaust manifold (3) and the connecting duct (9).

7. The exhaust module according to claim 4 and 5, **characterized in that** the first exhaust manifold (2) is provided with bellows (12) that are arranged between the first branch pipes (10), and the second exhaust manifold (3) is provided with bellows (12) that are arranged between the second branch pipes (11).

8. A reciprocating engine (13), in which cylinders are arranged in two banks (15, 16), the reciprocating engine (13) comprising:
- a turbocharger (17) having a compressor (18) and a turbine (19), through which turbine (19) exhaust gases from cylinders (14) of a first cylinder bank (15) and a second cylinder bank (16) are arranged to pass, **characterized in that** the reciprocating engine (13) s provide with an exhaust module (1) according to any of the preceding claims, wherein the first exhaust manifold (2) is arranged to receive exhaust gas from the cylinders of the first cylinder bank (15) and the second exhaust manifold (3) is arranged to receive exhaust gas from the cylinders of the second cylinder bank (16), and the second end (7) of the second exhaust manifold (3) is connected to a turbine inlet (20) by means of the second connecting duct (8).

## Patentansprüche

1. Abgasmodul (1) für eine turbogeladene (17) Kolbenmaschine (13), in welcher die Zylinder (14) in zwei Bänken (15, 16) angeordnet sind, wobei das Abgasmodul (1) umfasst
- einen ersten Abgasverteiler (2) zum Aufnehmen von Abgas aus Zylindern einer ersten Zylinderbank (15), wobei der erste Abgasverteiler (2) ein erstes Ende (4) und ein zweites Ende (5) aufweist;
- einen zweiten Abgasverteiler (3) zum Aufnehmen von Abgas aus Zylindern einer zweiten Zylinderbank (16), wobei der zweite Abgasverteiler (3) ein erstes Ende (6) und ein zweites Ende (7) aufweist;
- einen Verbindungskanal (9), der das zweite Ende (5) des ersten Abgasverteilers (2) mit dem ersten Ende (6) des zweiten Abgasverteilers (3) verbindet, und
- einen zweiten Verbindungskanal (8) zum Verbinden des zweiten Endes (7) des zweiten Abgasverteilers mit einem Turbineneinlass (20), **dadurch gekennzeichnet, dass** das Abgasmodul (1) ferner mit einem dritten Verbindungskanal (22) versehen ist, der das erste Ende (4) des ersten Abgasverteilers (2) mit dem zweiten Verbindungskanal (8) verbindet.

2. Abgasmodul nach Anspruch 1, **dadurch gekennzeichnet, dass** das Abgasmodul (1) mit dem dritten Verbindungskanal (22) versehen ist und ein Innendurchmesser des dritten Verbindungskanals (22) kleiner als jener des ersten Abgasverteilers (2) ist.

3. Abgasmodul nach Anspruch 1 oder 2, **dadurch gekennzeichnet, dass** das Abgasmodul (1) mit dem dritten Verbindungskanal (22) versehen ist und der Innendurchmesser des dritten Verbindungskanals (22) mindestens 40 % des Innendurchmessers des ersten Abgasverteilers (2) ist.

4. Abgasmodul nach Anspruch 1, **dadurch gekennzeichnet, dass** der erste Abgasverteiler (2) erste Abzweigleitungen (10) zum Verbinden des ersten Abgasverteilers (2) mit Abgasöffnungen (21) der Zylinder der ersten Zylinderbank (15) umfasst.

5. Abgasmodul nach Anspruch 1 oder 4, **dadurch gekennzeichnet, dass** der zweite Abgasverteiler (3) zweite Abzweigleitungen (11) zum Verbinden des zweiten Abgasverteilers (3) mit Abgasöffnungen (21) der Zylinder der zweiten Zylinderbank (16) umfasst.

6. Abgasmodul nach Anspruch 1, **dadurch gekennzeichnet, dass** ein Balg (12) angeordnet ist
- zwischen dem zweiten Ende (5) des ersten Abgasverteilers (2) und dem Verbindungskanal (9) und
- zwischen dem ersten Ende (6) des zweiten Abgasverteilers (3) und dem Verbindungskanal (9).

7. Abgasmodul nach Anspruch 4 und 5, **dadurch gekennzeichnet, dass** der erste Abgasverteiler (2) mit Bälgen (12) versehen ist, die zwischen den ersten Abzweigleitungen (10) angeordnet sind, und der zweite Abgasverteiler (3) mit Bälgen (12) versehen ist, die zwischen den zweiten Abzweigleitungen (11) angeordnet sind.

8. Kolbenmaschine (13), in welcher die Zylinder in zwei Bänken (15, 16) angeordnet sind, wobei die Kolbenmaschine (13) umfasst:
- einen Turbolader (17) mit einem Kompressor (18) und einer Turbine (19), durch welche Turbine (19) Abgase von Zylindern (14) einer ersten Zylinderbank (15) und einer zweiten Zylinderbank (16) durchgehen, **dadurch gekennzeichnet, dass** die Kolbenmaschine (13) mit einem Abgasmodul (1) nach einem der vorangehenden Ansprüche versehen ist, wobei der erste Abgasverteiler (2) zum Aufnehmen von Abgas aus den Zylindern der ersten Zylinderbank (15) angeordnet ist und der zweite Abgasverteiler (3) zum Aufnehmen von Abgas aus den Zylindern der zweiten Zylinderbank (16) angeordnet ist und das zweite Ende (7) des zweiten Abgasverteilers (3) durch den zweiten Verbindungskanal (8) mit einem Turbineneinlass (20) verbunden ist.

## Revendications

1. Module d'échappement (1) pour moteur à mouvement alternatif (13) turbocompressé (17) dans lequel les cylindres (14) sont disposés dans deux bancs (15, 16), le module d'échappement (1) comprenant
- un premier collecteur d'échappement (2) destiné à recevoir du gaz d'échappement en provenance de cylindres d'un premier banc de cylindres (15), ledit premier collecteur d'échappement (2) comportant une première extrémité (4) et une seconde extrémité (5),
- un deuxième collecteur d'échappement (3) destiné à recevoir du gaz d'échappement en provenance de cylindres d'un deuxième banc de cylindres (16), ledit deuxième collecteur d'échappement (3) comportant une première extrémité (6) et une seconde extrémité (7),
- une conduite de connexion (9) qui connecte la seconde extrémité (5) du premier collecteur d'échappement (2) à la première extrémité (6) du deuxième collecteur d'échappement (3), et
- une deuxième conduite de connexion (8) destinée à connecter la seconde extrémité (7) du deuxième collecteur d'échappement à une admission de turbine (20), **caractérisé en ce que** le module d'échappement (1) est en outre pourvu d'une troisième conduite de connexion (22) qui connecte la première extrémité (4) du premier collecteur d'échappement (2) à la deuxième conduite de connexion (8).

2. Module d'échappement selon la revendication 1, **caractérisé en ce que** le module d'échappement (1) est pourvu de la troisième conduite de connexion (22) et qu'un diamètre intérieur de la troisième conduite de connexion (22) est inférieur à celui du premier collecteur d'échappement (2),

3. Module d'échappement selon la revendication 1 ou 2, **caractérisé en ce que** le module d'échappement (1) est pourvu de la troisième conduite de connexion (22) et que le diamètre intérieur de la troisième conduite de connexion (22) représente au moins 40 % du diamètre intérieur du premier collecteur d'échappement (2).

4. Module d'échappement selon la revendication 1, **caractérisé en ce que** le premier collecteur d'échappement (2) comprend des premiers tuyaux ramifiés (10) pour connecter le premier collecteur d'échappement (2) à des ports d'échappement (21) des cylindres du premier banc de cylindres (15).

5. Module d'échappement selon la revendication 1 ou 4, **caractérisé en ce que** le deuxième collecteur d'échappement (3) comprend des seconds tuyaux ramifiés (11) pour connecter le deuxième collecteur d'échappement (3) à des ports d'échappement (21) des cylindres du second banc de cylindres (16).

6. Module d'échappement selon la revendication 1, **caractérisé en ce qu'**un soufflet (12) est dispose :
- entre la seconde extrémité (5) du premier collecteur d'échappement (2) et la conduite de connexion (9), et
- entre la première extrémité (6) du deuxième collecteur d'échappement (3) et la conduite de connexion (9).

7. Module d'échappement selon les revendications 4 et 5, **caractérisé en ce que** le premier collecteur d'échappement (2) est pourvu de soufflets (12) qui sont disposés entre les premiers tuyaux ramifiés (10) et que le deuxième collecteur d'échappement (3) est pourvu de soufflets (12) qui sont disposés entre les seconds tuyaux ramifiés (11).

8. Moteur à mouvement alternatif (13), dans lequel des cylindres sont disposés dans deux bancs (15, 16), ce moteur à mouvement alternatif (13) comprenant :
- un turbocompresseur (17) comportant un compresseur (18) et une turbine (19), à travers laquelle turbine (19) des gaz d'échappement provenant des cylindres (14) d'un premier banc de cylindres (15) et d'un second banc de cylindres (16) sont destinés à passer, **caractérisé en ce que** le moteur à mouvement alternatif (13) est pourvu d'un module d'échappement (1) selon l'une quelconque des revendications précédentes, le premier collecteur d'échappement (2) étant destiné à recevoir du gaz d'échappement en provenance des cylindres du premier banc de cylindres (15) et le deuxième collecteur d'échappement (3) étant destiné à recevoir du gaz d'échappement en provenance des cylindres du deuxième banc de cylindres (16), et la seconde extrémité (7) du deuxième collecteur d'échappement (3) étant connectée à une admission de turbine (20) au moyen de la deuxième conduite de connexion (8).
